# EUROPEAN PATENT APPLICATION

(11) **EP 4 787 320 A1**
(43) Date of publication of application: **05.08.2026**
(21) Application number: 26154977.8
(22) Date of filing: 29.01.2026
(51) Int. Cl.: G06T 11/60

(54) **GENERATIVE MODEL-BASED MODIFICATION OF VISUAL CONTENT IN COMPUTING SYSTEMS**

(30) Priority: 31.01.2025 US 202519043326
(71) Applicant: Figma, Inc., San Francisco, CA 94102 (US)
(72) Inventor: CHEN, Rocky, San Francisco, 94102 (US); BULLINGTON, Michael Edward, San Francisco, 94102 (US)
(74) Representative: Morrall, Jonathan Ian McLachlan

(57) **Abstract**

Embodiments of the present disclosure provide techniques for generating candidate visual assets using generative artificial intelligence models and a selection of a visual asset based on which the candidate visual assets are generated. An example method generally includes receiving an indication of a visual asset for modification and an input natural language prompt specifying a design objective to be applied to the indicated visual asset. The design objective is translated to a plurality of transforms to be applied to the indicated visual asset. A candidate set of visual assets is generated based on applying the plurality of transforms to the indicated visual asset, and the candidate set of visual assets are output for selection in a user interface.

## Description

### BACKGROUND

### Field of the Various Embodiments

Embodiments of the present disclosure relate generally to graphic design tools and, more specifically, to techniques for generating visual content using generative artificial intelligence models.

### Description of the Related Art

Generative artificial intelligence models can be used to generate a variety of content, such as textual content, image content, or the like. To generate content, a generative artificial intelligence model generally ingests an input prompt specifying parameters of the content to be generated, and the generative artificial intelligence model outputs content according to the parameters. These generative artificial intelligence models can ingest a textual prompt and output a response in one or more data modalities based on the application for which the generative artificial intelligence models are trained. Language models can generate textual responses to input prompts, while diffusion models can generate image outputs from an input prompt.

Generally, interaction with generative artificial intelligence models is a linear process in which a generative artificial intelligence model generates an output in response to a first textual input prompt and receives a second input prompt related to the generated output. In this linear process, an output of the generative artificial intelligence model can be iteratively refined until a desired result is achieved. That is, the content generated in a first round of inferencing generally serves as context for a second round of inferencing that iterates on the content generated in the first round of inferencing (e.g., adds additional detail to content generated in the first round of inferencing, generates content describing a concept included in content generated in the first round of inferencing, etc.).

For some applications, successive textual prompts referring to content generated by a generative artificial intelligence model in prior inferencing rounds may be sufficient to prompt a generative artificial intelligence model to generate a desired output. However, for other applications, textual prompts input into a generative artificial intelligence model in a linear fashion may not correspond with the manner in which users perform various tasks. For example, the linear nature in which generative artificial intelligence models operate may not provide the appropriate infrastructure to allow for the generation of content using forward iteration and trackbacks to previously generated content. In the graphical design context in which the design process flow executed by a user involves the creation of visual content (e.g., user interface designs) using forward iteration and trackbacks to previously generated designs, generative artificial intelligence models that operate in the linear prompting paradigm may not allow for the generation of visual content in a natural and intuitive manner.

As the foregoing illustrates, what is needed are more effective techniques for generating visual content using generative user interface models.

### SUMMARY

One embodiment of the present disclosure provides techniques for generating candidate visual assets using generative artificial intelligence models and a selection of a visual asset based on which the candidate visual assets are generated. An example method generally includes receiving an indication of a visual asset for modification and an input natural language prompt specifying a design objective to be applied to the indicated visual asset. The design objective is translated to a plurality of transforms to be applied to the indicated visual asset. A candidate set of visual assets is generated based on applying the plurality of transforms to the indicated visual asset, and the candidate set of visual assets are output for selection in a user interface.

One embodiment of the present disclosure provides techniques for refining visual assets using generative artificial intelligence models. An example method generally includes receiving an indication of a visual asset for modification and an input natural language prompt specifying a design objective to be applied to the indicated visual asset. Visual components in the indicated visual asset and properties of the identified visual components to be modified are identified based on the specified design objective. One or more control panels are populated with one or more controls for modifying the identified visual components to achieve the specified design objective. An input is received in at least one of the one or more control panels, and the indicated visual asset is modified based on the received input.

One technical advantage of the disclosed techniques relative to the prior art is that the disclosed techniques allow for users of generative artificial intelligence models to interact with these models in a nondeterministic, nonlinear fashion. Generative artificial intelligence models can allow for forwards and backwards interaction with results generated by these generative artificial intelligence models. The ability to generate content using forwards and backwards interaction with results generated by a generative artificial intelligence model improves the ability of generative artificial intelligence models to generate content by flexibly selecting the context based on which a generative artificial intelligence model generates results of an inferencing round. For example, generative artificial intelligence models can generate content based on the context of results of any prior inferencing round performed by the generative artificial intelligence model and may be unbound from the context of the results of the immediate prior inferencing round. In the context of graphical design applications, the techniques presented herein allow for users to interact with generative artificial intelligence models using an interaction paradigm that replicates the forward and backward progression of generating visual content. Further, these generative artificial intelligence models can generate a plurality of candidate visual assets during each round of inferencing, allowing for the selection (and re-selection) of different visual assets as a starting point for the generation of subsequent sets of candidate visual assets.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computer system configured to implement one or more aspects of various embodiments of the present disclosure.
Figure 2 illustrates an initial visual asset and an input prompt specifying a design objective for the visual asset, according to some embodiments.
Figure 3 illustrates a candidate set of visual assets generated by a generative artificial intelligence model based on an input prompt specifying a design objective for a visual asset, according to some embodiments.
Figure 4 illustrates the generation of different candidate sets of visual assets by a generative artificial intelligence model based on selection of a visual asset in an earlier candidate set of visual assets, according to some embodiments.
Figure 5 is a flow diagram of method steps for generating visual assets based on an input prompt specifying a design objective for a visual asset and selection of the visual asset based on which a generative artificial intelligence model generates the visual assets, according to some embodiments.
Figure 6 illustrates control panels for adjusting the appearance of a visual asset based on an input prompt specifying a design objective for the visual asset, according to some embodiments.
Figure 7 illustrates changes to a visual asset generated based on adjustments to one or more parameters in control panels for adjusting the appearance of a visual asset, according to some embodiments.
Figure 8 illustrates changes to a visual asset generated based on adjustments to parameters identified based on an input prompt specifying a design objective for the visual asset, according to some embodiments.
Figure 9 is a flow diagram of method steps for modifying visual assets based on changes to parameters identified by a generative artificial intelligence model from an input prompt specifying a design objective for a visual asset, according to some embodiments.
Figure 10 illustrates a network computing system to implement an interactive graphic application platform, according to some embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

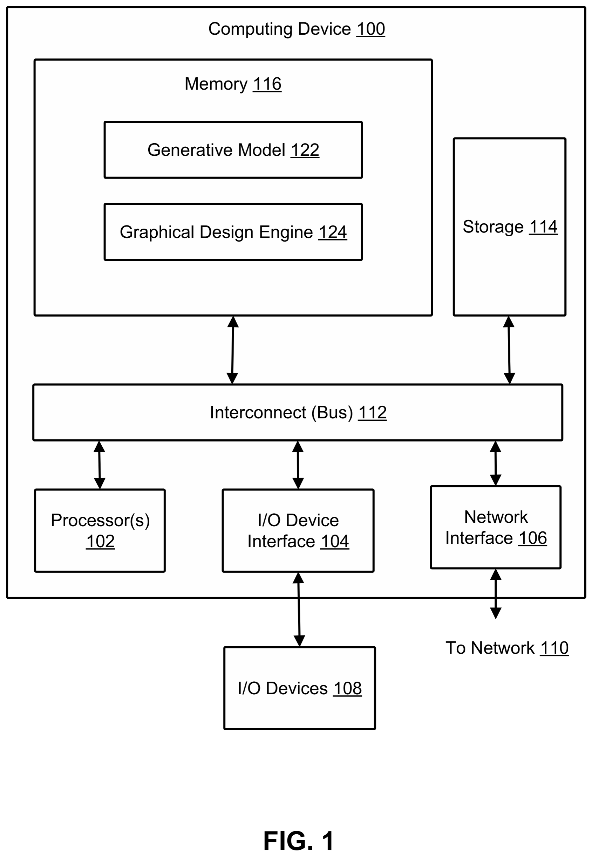

Figure 1 illustrates a computing device 100 configured to implement one or more aspects of various embodiments of the present invention. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run an generative model 122 and a graphical design engine 124 that reside in a memory 116.

It is noted that the computing device described herein is illustrative and that any other technically feasible configurations fall within the scope of the present disclosure. For example, multiple instances of generative model 122 or graphical design engine 124 could execute on a set of nodes in a distributed and/or cloud computing system to implement the functionality of computing device 100. In another example, generative model 122 or graphical design engine 124 could execute on various sets of hardware, types of devices, or environments to adapt generative model 122 or graphical design engine 124 to different use cases or applications. In a third example, generative model 122 or graphical design engine 124 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, a microphone, and so forth, as well as devices capable of providing output, such as a display device or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (Wi-Fi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Generative model 122 and graphical design engine 124 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including generative model 122 or graphical design engine 124.

### Example Generating Candidate Visual Assets Using Generative Artificial Intelligence Models

In graphical design software, such as that implemented by the graphical design engine 124 illustrated in Figure 1, visual assets, such as user interface components in a user interface under design in the graphical design engine 124, may be rendered and designed. A visual asset, as used herein, may be a group of visual components rendered in a user interface. Visual assets may be vector assets defined in terms of mathematical relationships between different components or raster assets defined in terms of absolute pixel locations. In some cases, a visual asset may include one or more containers, defined in the vector space, in which raster assets (e.g., images) can be inserted. A visual asset may include any number of visual components, and a visual asset may be defined in terms of relative positioning or other spatial relationships between visual components in the visual asset. Visual assets may be defined *a priori* (e.g., as templates or pre-designed components in the graphical design engine 124) or may be manually designed by a user of the graphical design engine 124. These spatial relationships between visual components in the visual asset may generally refer to the spacing and/or an orientation of one visual component in the visual asset relative to another visual component in the visual asset.

To accelerate the process of creating visual assets, various embodiments described herein use generative artificial intelligence models (e.g., the generative artificial intelligence model 122) to translate a design objective in an input natural language prompt to modifications applied to an identified visual asset. A generative artificial intelligence model generally is an artificial intelligence model that generates content in response to an input prompt specifying parameters based on which the generative artificial intelligence model generates the content. Generative artificial intelligence models can generate content in any of a variety of modalities, such as textual content, image content, source code that, when executed, generates a user interface, or other types of content. Generally, a design objective may refer to a characteristic (e.g., a desired visual appearance or functionality) of a visual asset rendered in a user interface. In various examples, a design objective generally may specify the desired visual appearance of a visual asset in language used by designers to describe the appearance of a visual asset and the relationship between components in the visual asset and/or the desired functionality of a visual asset as a natural language input specifying how the visual asset should react to various inputs or events. For example, a natural language prompt may include design objectives that indicate that an identified visual asset should be relatively taller or shorter than the current design of the identified visual asset, heavier in weight or lighter in weight than the current design of the visual asset, have more or less space (or breathing room) between visual components than the current design of the visual asset, or the like. In another example, a natural language prompt may include design objectives that indicate transformations to apply to a visual asset when various specified events occur, such as changes in the appearance of buttons or other clickable interface elements when such an element is clicked, movement of a visual asset when defined events occur, or the like.

Further, as discussed in detail herein, embodiments of the present disclosure may allow for the generation of visual assets using forwards and backwards iteration of designs as an identified base design for future iterations of generating sets of candidate visual assets. By allowing for forwards and backwards selection of visual assets as the base for which subsequent iterations of generating sets of candidate visual assets, embodiments presented herein may allow for generative artificial intelligence models to operate in a non-linear fashion similar to the process by which users design visual assets or generate other content. That is, unlike generative artificial intelligence models that iterate on the output of the immediate previous inferencing round executed by the generative artificial intelligence model, embodiments presented herein allow for the result of any inferencing round performed by the generative artificial intelligence model to be used as the basis for which subsequent outputs of the generative artificial intelligence model are generated.

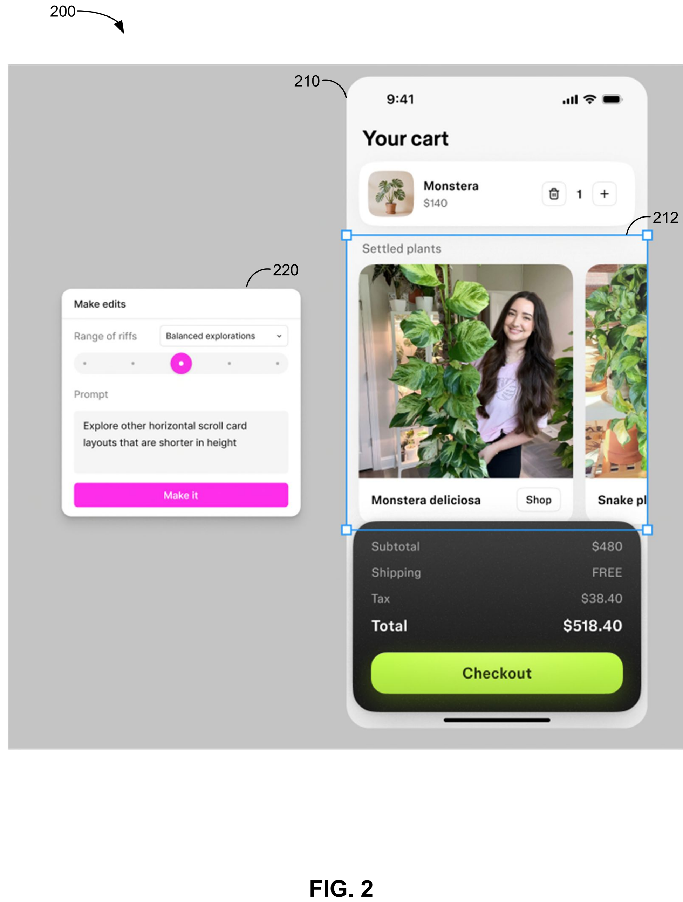

Figure 2 illustrates an example 200 of an initial visual asset and an input prompt specifying a design objective for the visual asset, according to some embodiments.

As illustrated, to initialize the generation of candidate visual assets using a generative artificial intelligence model and an input natural language prompt, a visual asset 212 may be added to a user interface 210. The visual asset 212 may be selected from a template or predefined collection of visual assets or may be an initial design created by a user of graphical design software. In the example 200 illustrated in Figure 2, the visual asset 212 is illustrated as a horizontal scroll card that allows a user of the user interface to view different items presented in a container by scrolling horizontally.

The input natural language prompt based on which the visual asset 212 is to be modified may be input into a control panel 220. As illustrated, the control panel 220 may allow for the input of a natural language prompt specifying a design objective for the selected visual asset 212; as illustrated, the input prompt input into the control panel 220 specifies that a generative artificial intelligence model should generate candidate visual assets that are shorter in height than the visual asset 212. In some embodiments, the control panel 220 may further include additional options that may be used by the generative artificial intelligence model to condition how the candidate visual assets generated by the generative artificial intelligence model are to be generated. For example, as illustrated, the control panel 220 may include a slider that can be used to define the range of visual assets to be generated based on the generative artificial intelligence model and the input natural language prompt. The slider may indicate, for example, that the set of candidate visual assets generated based on the generative artificial intelligence model and the input natural language prompt include a balanced range of candidate visual assets or include a range of candidate visual assets that are biased towards refinement of a selected visual asset or towards wholesale re-imagination of the design of the selected visual asset.

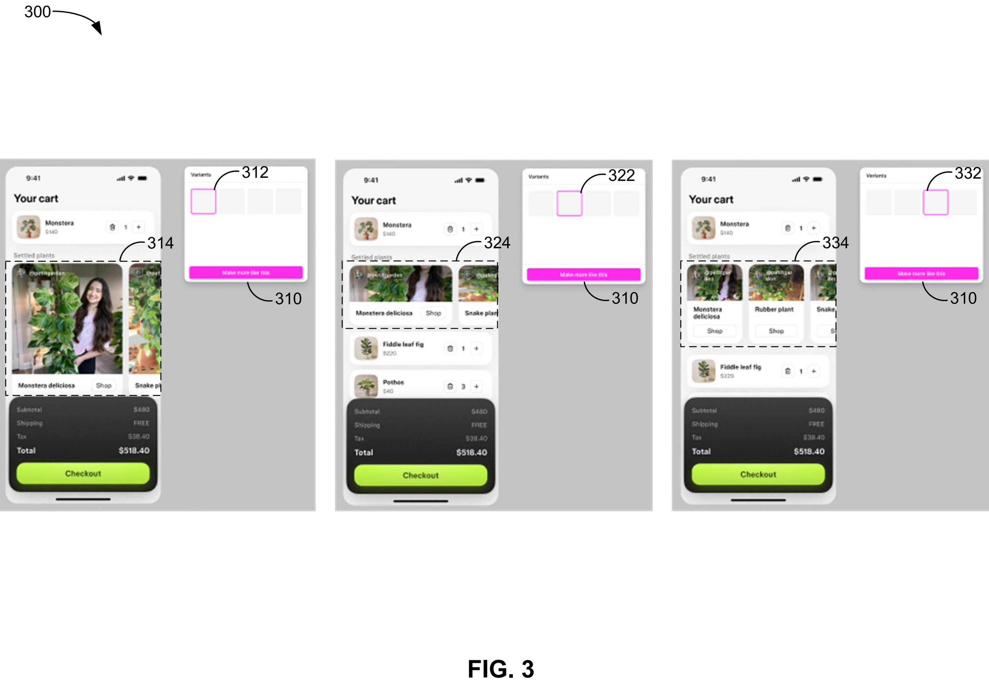

Figure 3 illustrates a candidate set 300 of visual assets generated by a generative artificial intelligence model based on an input prompt specifying a design objective for a visual asset, according to some embodiments.

The candidate set 300 of visual assets may be generated, for example, based on the selected visual asset 212 and an input prompt captured by the control panel 220 illustrated in Figure 2. The input prompt may be a natural language textual prompt input into a text input field in the control panel 220, an input derived from user interaction with an interactive user interface element in the control panel 220 (e.g., a slider as illustrated in Figure 2), or inputs in any of a plurality of modalities (voice, image data, eye tracking, motion tracking, etc.). For non-textual inputs, the input prompt may be derived from user interaction with an interactive user interface element, from extracting semantic data or an intent from inputs in a non-textual modality, or the like. For example, to generate an input prompt usable by a generative artificial intelligence model to generate the candidate set 300 of visual assets, the same or a different generative artificial intelligence model can transform an intent identified from user interaction with an interactive user interface element or an input in a non-textual input modality into a textual prompt. The candidate set of visual assets may include any number of candidate visual assets 314, 324, 334 (amongst others, not illustrated in Figure 3) from which a user can make a selection for use as the basis for further iteration or insertion into a user interface (e.g., the user interface 210 illustrated in Figure 2). In some embodiments, the candidate set 300 of visual assets may correspond to candidate visual assets generated in an initial inferencing round based on the initial selection of a base visual asset and a natural language prompt processed by the generative artificial intelligence model.

Generally, to generate candidate visual assets 314, 324, 334 (amongst others), the generative artificial intelligence model (e.g., the generative artificial intelligence model 122 illustrated in Figure 1) extracts a design objective from an input natural language prompt and uses the extracted design objective to generate transforms to apply to the selected visual asset 212. Generally, the generative artificial intelligence model may be a design language model trained on a corpus of design-related inputs to translate a design objective identified in a generative artificial intelligence model to a broad set of transformations to apply to a visual asset. For example, the generative artificial intelligence model may be trained to output instructions or other outputs that provide a general direction in which designs of visual assets should follow. A general direction in which designs of visual assets should follow may include, for example, an output of a natural language directive specifying a relative amount of change to apply to a selected visual asset 212 based on which the one or more transforms can be generated, parameter values specifying a delta between the value of a parameter in the selected visual asset 212 and the value of the corresponding parameter in candidate visual assets 314, 324, 334, a range of valid adjustments that can be applied to parameters defining the selected visual asset 212 to achieve the specified design objective, or the like. The design language model can identify parameters to modify based on various concepts expressed in words or collections of words associated with a design objective or direction in an input prompt, such as size-related concepts (smaller, larger, etc.), spacing-related concepts (more or less breathing room, more or less visual density, etc.), appearance-related concepts (bolder, lighter, etc.), color-related concepts (hue, luminance, etc.) or the like.

To visualize the candidate visual assets 314, 324, 334 (amongst others not illustrated in Figure 3), the graphical design engine 124 can generate a control panel 310 including visualization options associated with each of the candidate visual assets generated by a generative artificial intelligence model based on a design objective extracted from a natural language prompt. The control panel may include buttons or other selectable user interface elements that can allow a user to visualize a candidate visual asset by hovering over a button associated with the candidate visual asset (e.g., to visualize the candidate visual asset 314 by hovering over the button 312, to visualize the candidate visual asset 324 by hovering over the button 322, to visualize the candidate visual asset 334 by hovering over the button 332, etc.).

While Figure 3 illustrates the candidate visual asset 314 as the same asset as the visual asset 212 based on which candidate visual assets are generated, it should be understood that the candidate visual asset 314 may be a different visual asset generated by modifying the visual asset 212. The candidate visual asset 324 and 334 illustrate different visual assets generated based on different transforms generated based on a design objective extracted from an input natural language prompt. Generally, the candidate visual asset 324 and 334 may include the same visual components as the visual asset 212 but may display the visual components in a different arrangement according to the design object extracted from the input natural language prompt. To generate the candidate visual asset 324 from the visual asset 212 and the input natural language prompt illustrated in Figure 2, one or more transforms generated from the design prompt may specify that the container in which the visual components of the visual asset 212 are laid out is shorter and may retain the width of the visual asset 212. Meanwhile, to generate the candidate visual asset 334 from the visual asset 212 and the input natural language prompt illustrated in Figure 2, the one or more transforms generated from the design prompt may change both the width and height of the container in which the visual components of the visual asset 212 are laid out and may change the order in which the visual components are laid out. For example, due to changing the width of the container in which visual components are laid out, the candidate visual asset 334 may be generated with a selectable button positioned below a textual label, which may be different from the side-by-side arrangement of the textual label and the selectable button illustrated in the candidate visual asset 324.

For visual assets that are defined as vector graphics components, the transforms identified by the generative artificial intelligence model may include various changes to the visual properties of these components. These visual properties may include, for example, the size and positioning of one or more visual components associated with the visual asset relative to the size and positioning of these visual components in the selected visual asset 212 based on which the candidate visual assets are generated, changes to textual content, changes to the color palette used to illustrate various components, and so on. For example, to reduce the vertical height of a candidate visual asset relative to the selected visual asset 212, the size of the container and certain components inside the container may be reduced by a defined proportional amount (e.g., 50 percent, as illustrated by the candidate visual asset 324, 25 percent, as illustrated by the candidate visual asset 334, etc.). To adjust the positioning of visual components within a visual asset, the relationship between reference points for different visual components may be adjusted. As illustrated, the relationship between the image component and the other components of the candidate visual asset 324 may remain the same, while the relationship between the components in the candidate visual asset 334 may change to reflect the vertical alignment of the image, textual label, and selectable button. It should be understood that the foregoing are but examples of transforms that can be identified for application to the selected visual asset 212 to generate the candidate visual assets 314, 324, 334 (amongst others), and that other (spatial or non-spatial) transforms may be contemplated.

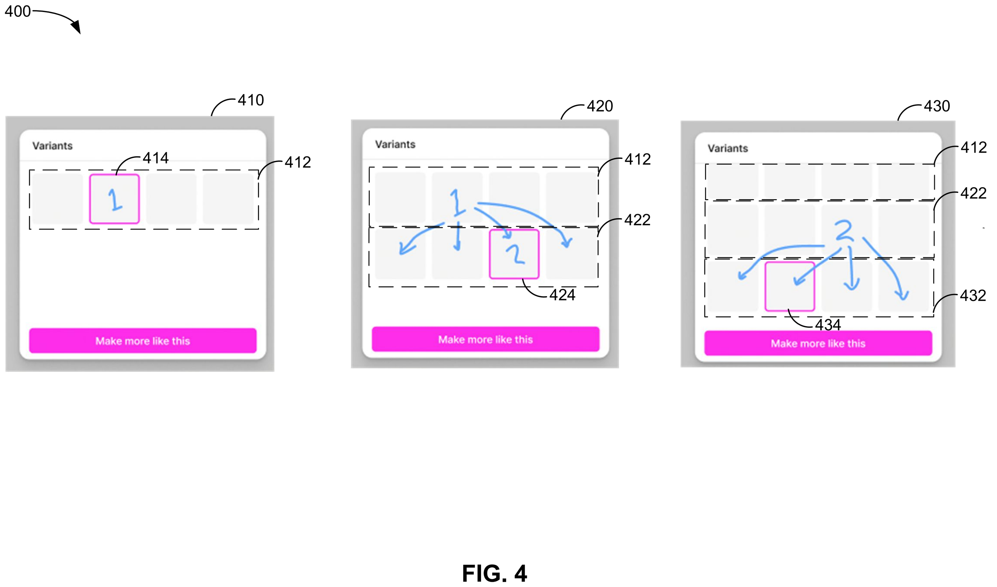

Figure 4 illustrates an example 400 of generating different candidate sets of visual assets by a generative artificial intelligence model based on selection of a visual asset in an earlier candidate set of visual assets, according to some embodiments.

Interface 410 illustrates a control panel in which a set of candidate visual assets generated in a first round of inferencing may be previewed and selected. In the interface 410, the candidate visual assets may be presented in the selection panel 412. In some embodiments, the selection panel 412 may include a plurality of buttons, with each button corresponding to one of the candidate visual assets generated in the first round of inferencing. As illustrated, a user can select one of the candidate visual assets (e.g., the candidate visual asset corresponding to the button 414) generated in the first round of inferencing for use as the basis for which further refinement by a generative artificial intelligence model can be performed. In some embodiments, selecting (e.g., clicking on, hovering over, etc.) a button corresponding to a candidate visual asset in the selection panel 412 may allow a user to preview the appearance of a candidate visual asset in a user interface. Generation of a subsequent set of candidate visual assets may be performed based on a selection of a button in the selection panel 412 corresponding to a candidate visual asset and the execution of a command to generate further variants of the selected candidate visual asset (e.g., clicking a button requesting that the generative artificial intelligence model generate further examples like the selected candidate visual asset corresponding to the button 414).

Subsequently, a second round of inferencing is performed to generate a set of candidate visual assets presented in the selection panel 422. In the interface 420, the first set of candidate visual assets presented in the selection panel 412 may be preserved so that a user can change the selection of visual assets included in a user interface to a different visual asset than the visual asset corresponding to the button 414. As illustrated, the selection panel 422, like the selection panel 412 discussed above, may include a plurality of buttons that are associated with the set of candidate visual assets generated during the second round of inferencing. Selection of a button (e.g., the button 424) may be used to preview the appearance of a candidate visual asset in the user interface. As discussed above with respect to the interface 410, generation of a subsequent set of candidate visual assets may be performed based on a selection of a button in the selection panel 422 and the execution of a command to generate further variants of the selected candidate visual asset.

Interface 430 illustrates a control panel in which candidate visual assets generated in a third round of inferencing may be previewed and selected. The candidate visual assets generated in the third round of inferencing, which may be displayed in the selection panel 432, may be generated based on the selection of a visual asset corresponding to button 424 in the second round of inferencing (and indirectly from the selection of the visual asset corresponding to button 414 in the first round of inferencing). As illustrated, the interface 430 may include the selection panels 412 and 422 to allow a user to select a visual asset from an earlier inferencing round as the basis for generating subsequent variants in subsequent inferencing rounds using the generative artificial intelligence model.

In some embodiments, the amount by which candidate visual assets generated in an inferencing round using a generative model (e.g., the generative model 122 illustrated in Figure 1) may change based on the number of previous inferencing rounds executed for designing a specific visual asset. For example, in the first round of inferencing, a large variety of candidate visual assets may be generated, with each candidate visual asset having significantly different appearances (e.g., as illustrated in Figure 3, in which the candidate visual assets 314, 324, 334 have significantly different height and/or width parameters and different arrangements of visual components). Subsequent inferencing rounds may be performed to generate refinements on the selected visual generated in a previous inferencing round. For example, the candidate visual assets included in the selection panel 422 may include variations generated from the visual asset corresponding to button 414 using smaller transforms than those used to generate the candidate visual assets included in the selection panel 412. Meanwhile, the candidate visual assets included in the selection panel 432 may include variations generated from the visual asset corresponding to button 424 using smaller transforms than those used to generate the candidate visual assets included in the selection panel 422.

In some embodiments, a generative model (e.g., the generative model 122 illustrated in Figure 1) can further refine a selected candidate visual asset based on another natural language prompt input into the generative artificial intelligence model. The natural language prompt used to refine the selected candidate visual asset may include further design objective information based on which refinements can be generated. In some embodiments, the design objective information specified in the natural language prompt may reference another visual asset in the user interface. When the natural language prompt references another visual asset in the user interface, the generative artificial intelligence model can ingest parameters associated with the referenced visual asset and determine transforms to use in generating candidate visual assets based on the parameters associated with the referenced visual asset. For example, a natural language prompt may specify that the design of a visual asset should be less visually prominent than a referenced visual asset. To be less visually prominent, various transforms related to size and weight of visual components in the visual asset may be generated. Generally, these transforms may reduce the size of various visual components in the visual asset to a size that is smaller than the referenced visual asset, reduce the visual weight of text displayed in the visual asset (e.g., move from a bolder version of a typeface to a lighter version of the typeface), and so on.

In some embodiments, transforms generated by the generative artificial intelligence model (e.g., the generative artificial intelligence model 122 illustrated in Figure 1) for generating candidate visual assets may be bounded by various parameters. For example, visual components including textual data may have a minimum height that may be defined *a priori* based, for example, on the resolution of a display on which a user interface is to be rendered, the physical size of the display, a pixel density of the display, and the like. Transforms applied to these visual components may perform unlimited modifications to a variety of parameters associated with these visual components that do not affect the height of a visual component (e.g., may perform any of a variety of transforms related to positioning, typeface weight, typeface, etc.). Height-related transforms applied to these visual components, however, may be constrained so that the height of these visual components in a candidate visual asset does not fall below the *a priori* defined minimum height.

In some embodiments, user-directed modifications to a visual asset may be performed prior to generating further candidate variants of the visual asset using transforms generated based on a design objective extracted from a natural language prompt by a generative artificial intelligence model. For example, a user can add, remove, or modify the appearance of various visual components in a visual asset at any time during the process of generating a visual asset using natural language prompts and a generative artificial intelligence model. The modifications to a candidate visual asset generated in the *i*^{th} inferencing round may subsequently be used as the basis on which candidate visual assets are generated in the *i +* 1^{th} inferencing round.

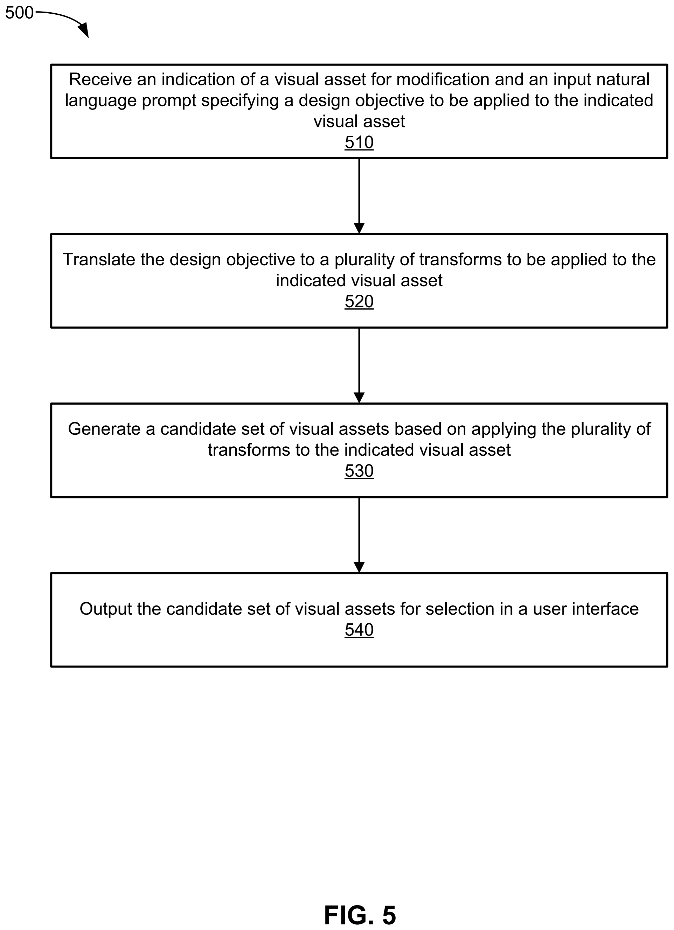

Figure 5 is a flow diagram illustrating example operations 500 for generating visual assets based on an input prompt specifying a design objective for a visual asset and selection of the visual asset based on which a generative artificial intelligence model (e.g., the generative model 122 illustrated in Figure 1) generates the visual assets, according to some embodiments. The operations 500 may be performed, for example, by a computing system including one or more processors, such as the processor(s) 102 of the computing device 100 illustrated in Figure 1.

As illustrated, operations 500 may begin at block 510, in which a processor receives an indication of a visual asset for modification and an input natural language prompt specifying a design objective to be applied to the indicated visual asset. The input natural language prompt may be provided directly to the processor or may be derived by the processor based on other inputs into the processor. For example, an input natural language prompt may be derived based on an intent or other semantic information extracted from user interaction with interactive user interface elements (e.g., sliders, buttons, etc. associated with changes in specific properties of a visual asset), inputs in non-textual modalities (e.g., audio and/or visual inputs), or the like.

At block 520, the operations 500 proceed with the processor translating the design objective to a plurality of transforms to be applied to the indicated visual asset.

In some embodiments, the plurality of transforms comprise modifications to a vector definition of the indicated visual asset that result in creation of visual assets conforming to the design objective. In some embodiments, the modifications comprise one or more of a change in size, a change in position, or a change in spatial relationships relative to one or more other visual components in the visual asset.

At block 530, the operations 500 proceed with generating a candidate set of visual assets based on applying the plurality of transforms to the indicated visual asset.

In some embodiments, the candidate set of visual assets comprises a first set of visual assets generated based on applying the plurality of transforms to the indicated visual asset and one or more other sets of visual assets generated based on prior iterations of applying transforms to prior selections of visual assets. As discussed above, the magnitude of transforms used in different iterations (e.g., inferencing rounds) may differ based on selection of an amount of change to be applied to a selected visual asset generated in a prior inferencing round and the number of inferencing rounds previously executed. Larger transforms may be applied in earlier inferencing rounds or when a user requests significant re-imagination of a visual asset, while smaller transforms may be applied in later inferencing rounds or when a user specifies that the next round of inferencing is to generate smaller refinements from a selected visual asset.

At block 540, the operations 500 proceed with outputting the candidate set of visual assets for selection in a user interface.

In some embodiments, indication of the visual asset comprises a selection of the visual asset from a candidate set of visual assets, the candidate set including one or more sub-sets of visual assets generated based on transforms generated from the design objective. Visual assets in a second sub-set of visual assets in the one or more sub-sets may be generated based on a selected visual asset in a first sub-set of visual assets.

In some embodiments, the indicated visual asset comprises a visual asset included in a first sub-set of visual assets, the first sub-set of visual assets being generated in an inferencing round prior to an inferencing round in which a second sub-set of visual assets was generated. The operations 500 may further include generating the candidate set of visual assets based on generating a third sub-set of visual assets based on the indicated visual asset in the first sub-set of visual assets and the plurality of transforms. To output the candidate set of visual assets for selection in the user interface, the second sub-set of visual assets may be replaced with the third sub-set of visual assets.

In some embodiments, the operations 500 further include temporarily modifying the user interface based on a transitory selection of a visual asset in the candidate set of visual assets. For example, in outputting the candidate set of visual assets for selection in a user interface, each visual asset in the candidate set of visual assets may be rendered in miniature in a selectable user interface control (e.g., a button, option button, drop-down menu, etc.). Hovering over a user interface control associated with a candidate visual asset may cause the candidate visual asset to be rendered in a user interface and displayed until a user moves a cursor away from the user interface control associated with the candidate visual asset.

In some embodiments, the operations 500 further include receiving an indication of a selected visual asset from the candidate set of visual assets to implement in the user interface. An indication of one or more modifications to apply to the selected visual asset may be received, and a modified visual asset may be generated based on the indicated one or more modifications and the selected visual asset. In some embodiments, the indicated one or more modifications comprise substitution of placeholder content in the selected visual asset with other content. In some embodiments, the indicated one or more modifications comprise additional visual components to add to the selected visual asset, the additional visual components being defined based at least on a position at which the additional visual components are to be added to the selected visual asset and a size of the additional visual components.

### Example Modification of Visual Assets Based on Generative Artificial Intelligence Models

Design objectives extracted from an input natural language prompt, as discussed, may be used to generate transforms to apply to visual components in a visual asset. Because these transforms are applied to specific properties of different visual components in a visual asset, the generation of transforms to apply to visual components in a visual asset may be used to populate one or more control panels that allow for user-directed modification of a visual asset.

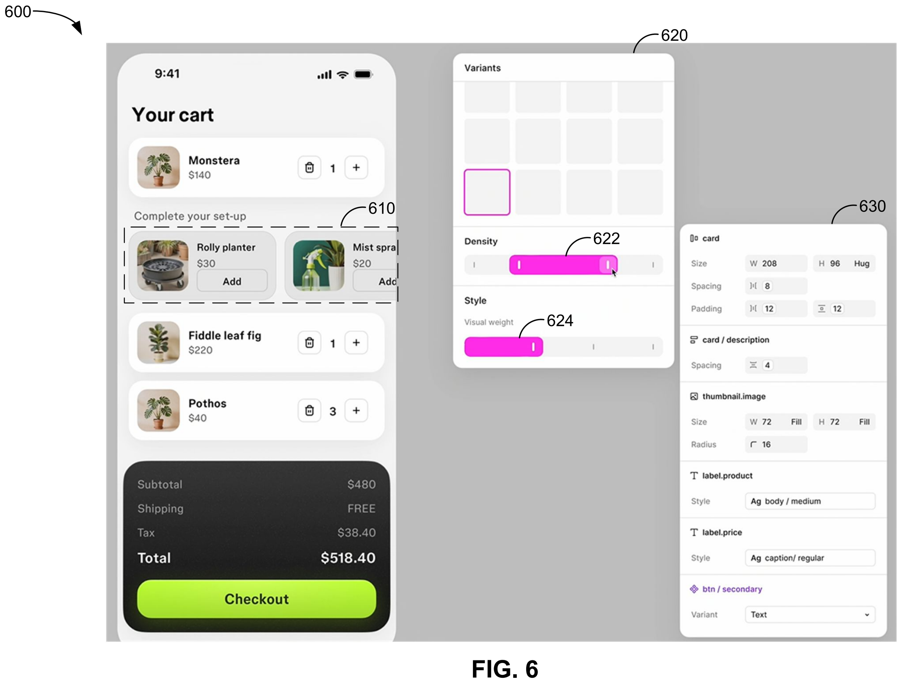

Figure 6 illustrates control panels for adjusting the appearance of a visual asset based on an input prompt specifying a design objective for the visual asset, according to some embodiments.

As illustrated, a visual asset 610, which may have been generated from an input natural language prompt as discussed above or may be an *a priori* defined visual asset, may be displayed in a user interface. A natural language prompt (not illustrated in Figure 6) may be input into a generative artificial intelligence model to specify a design objective for the visual asset 610. In the example 600 illustrated in Figure 6, the natural language prompt may specify a density and a visual weight objective to be modified. Generally, modifications to density design objectives may include modifications to spacing between various visual components of a visual asset. Modifications to visual weight design objectives may include modifications to text size and/or style, line weight and/or style, and the like.

To allow for modification of the visual asset 610, a graphical design engine (e.g., the graphical design engine 124 illustrated in Figure 1) can populate one or more control panels with various controls based on the design objective extracted from an input natural language prompt by a generative model (e.g., the generative model 122 illustrated in Figure 1). In the control panel 620, sliders 622 and 624 may be used to apply a set of transforms to the visual asset 610 and/or define minimum and maximum values for parameters in the control panel 630. The control panel 630 generally allows for user-defined modifications to parameters of the visual components associated with the visual asset based on manual entry or selection of values for these parameters.

When a visual asset is selected, values for the parameters associated with the components of the visual asset that are relevant to the design objective specified in the natural language prompt may be populated by the graphical design engine in the relevant portions of the control panel 630. The control panel 630 may include relevant parameters for the visual components of the visual asset. In the example 600, the visual components for which parameters are displayed in the control panel 630 include the container in which other visual components of the visual asset are displayed and the other visual components of the visual asset. The container may correspond to the "card" component illustrated in control panel 630, and the other visual components of the visual asset contained within the "card" component may include the description, thumbnail image, labels, and buttons.

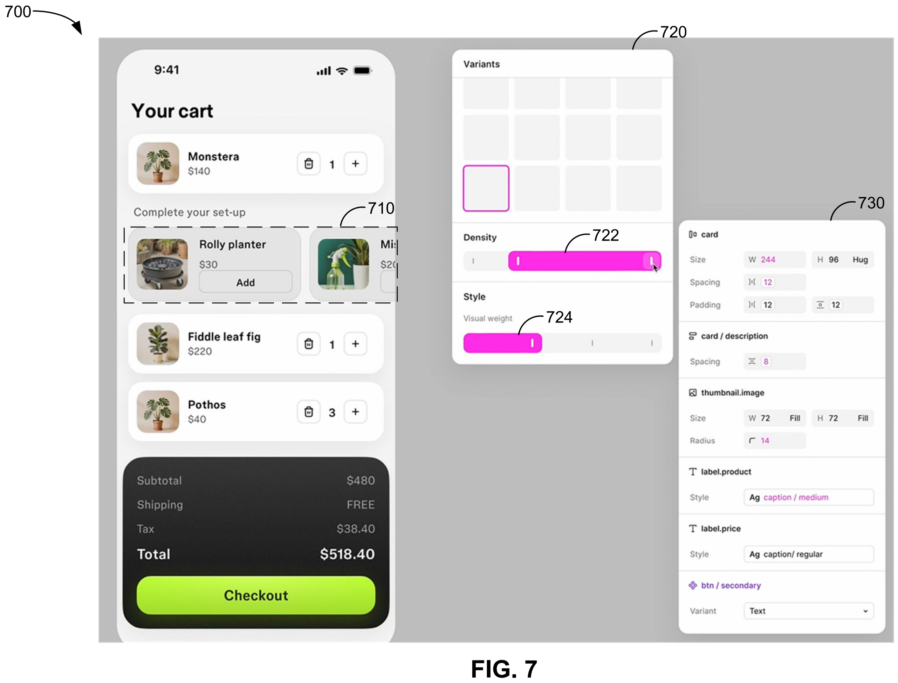

Figure 7 illustrates an example 700 of changes to a visual asset generated based on adjustments to one or more parameters in control panels for adjusting the appearance of a visual asset, according to some embodiments.

Visual asset 710 may be generated by the graphical design engine (e.g., the graphical design engine 124 illustrated in Figure 1) applying changes to the visual asset 610 illustrated in Figure 6 via changing the position of the slider 622 to a new position illustrated by the slider 722 in control panel 720. As illustrated, the visual asset 710 may be a less dense version of the visual asset 610. When the value of a slider changes, a transform may be identified by a generative model (e.g., the generative model 122 illustrated in Figure 1) that achieves a desired design objective. For example, to generate a visual asset that is less dense, the identified transform may increase the size of a container associated with a visual asset and may increase the spacing between different visual components included in the container. In some embodiments, when the position of a slider changes from that illustrated by slider 622 in Figure 6 to that illustrated by slider 722 in Figure 7, the graphical design engine can apply visual effects in the control panel 730 the values of parameters associated with visual components to allow for a user to easily identify which parameters have changed.

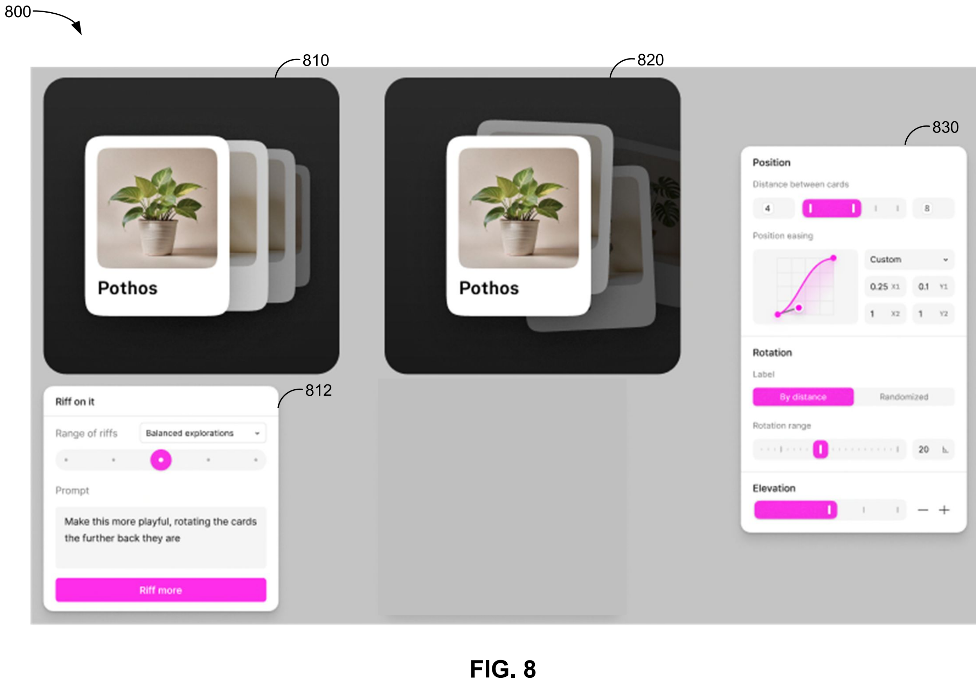

Figure 8 illustrates an example 800 showing changes to a visual asset generated based on adjustments to parameters identified based on an input prompt specifying a design objective for the visual asset, according to some embodiments.

In the example 800, a base visual asset 810 may be modified based on an input of a natural language prompt into a generative artificial intelligence model (e.g., the generative model 122 illustrated in Figure 1) via a control panel 812. As discussed with respect to the control panel 220 illustrated in Figure 2, a natural language prompt specifying a design objective and a range of variants to be generated by a generative artificial intelligence model may be specified. As illustrated, the natural language prompt specifies that the base visual asset 810 should be modified to be made "more playful" and that different cards should be rotated based on the depth of a card in a stack of cards.

A candidate visual asset 820 may be generated by the graphical design engine based on transforms identified from the base visual asset 810 and the design objective extracted from the input natural language prompt. As described above with respect to Figures 6 and 7, the properties relevant to the design objective extracted from the input natural language prompt may be populated into a control panel 830. In the example 800, the properties identified from the design objective may include the depth distance between cards, rotational information for different cards, a range of valid rotation values, elevation data, and the like. A user can accept the properties generated from the transform generated by the generative artificial intelligence model or apply various changes to the properties of the visual components via modification of the values associated with these properties in the control panel 830. The modifications of these values may be performed based on direct entry of new values into text boxes associated with different properties of the visual components, verbal and/or image-based inputs into a generative artificial intelligence model, input of a text prompt into a generative artificial intelligence model, etc. In some embodiments, the properties of the visual components may be associated with various user interface controls (e.g., sliders, steppers, etc.), interaction with which may modify the values associated with the properties of the visual components.

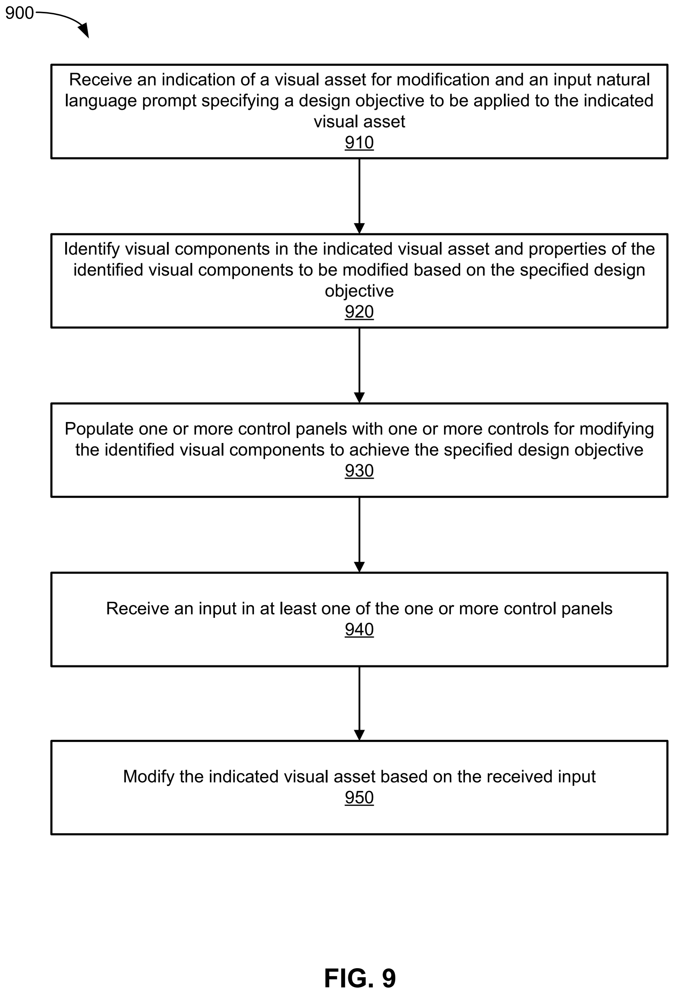

Figure 9 is a flow diagram illustrating example operations 900 for modifying visual assets based on changes to parameters identified by a generative artificial intelligence model from an input prompt specifying a design objective for a visual asset, according to some embodiments. The operations 900 may be performed, for example, by a computing system including one or more processors, such as the processor(s) 102 of the computing device 100 illustrated in Figure 1.

As illustrated, the operations 900 may begin at block 910, where a processor receives an indication of a visual asset for modification and an input natural language prompt specifying a design objective to be applied to the indicated visual asset.

In some embodiments, the input comprises a slider input associated with a design property of the visual asset. The slider input may include a plurality of positions, with each respective position of the plurality of positions being associated with a design objective to be applied to the indicated visual asset. For example, a slider that adjusts the density of a visual asset may include various positions corresponding to more or less density for the visual asset. In another example, a slider that adjusts the visual weight of a visual asset may include various positions corresponding to heavier or lighter weight for text, borders, and the like for the visual asset.

In some embodiments, an adjustment to the slider input applies a global modification to the identified visual components. The global modification may modify properties associated with multiple visual components associated with a visual asset.

In some embodiments, the slider input is displayed in a first control panel. An adjustment to the slider input modifies one or more of the properties of the identified visual components displayed in a second control panel.

In some embodiments, a range associated with the slider input may include a minimum value associated with a first set of values for the identified properties of the identified visual components and a maximum value associated with a second set of values for the identified properties of the identified visual components. The first set of values and the second set of values may be identified based on the specified design objective.

In some embodiments, the input comprises an adjustment to a property of the identified properties associated with one visual component of the identified visual components.

In some embodiments, a range of valid values for the identified properties of the identified visual components is associated with a defined amount of modification to apply to the visual asset.

In some embodiments, a range of valid values for the identified properties of the identified visual components is defined relative to another visual component in a user interface.

At block 920, the operations 900 proceed with identifying visual components in the indicated visual asset and properties of the identified visual components to be modified based on the specified design objective.

At block 930, the operations 900 proceed with populating one or more control panels with one or more controls for modifying the identified visual components to achieve the specified design objective.

At block 940, the operations 900 proceed with receiving an input in at least one of the one or more control panels.

At block 950, the operations 900 proceed with modifying the indicated visual asset based on the received input.

By using generative artificial intelligence models to identify design objectives in a natural language prompt and modify visual assets based on the identified design objectives, embodiments presented herein may allow generative artificial intelligence models to accelerate the process of creating visual assets. Generative artificial intelligence models can be used to generate a variety of candidate visual assets based on which further sets of candidate visual assets can be generated. Further, a history of candidate visual assets generated by the generative artificial intelligence model may be maintained so that a user can move forwards and backwards between visual assets generated during a variety of inferencing rounds executed by the generative artificial intelligence model. By doing so, embodiments presented herein may allow for generative artificial intelligence models to perform inferencing in a non-linear fashion in which the output of any prior inferencing round can be used as context for the execution of a new inferencing round. Further, the identification of a design objective and generation of transforms to apply to a visual asset may allow for visual assets to be designed using coarse and fine-grained modifications to parameters associated with the visual asset.

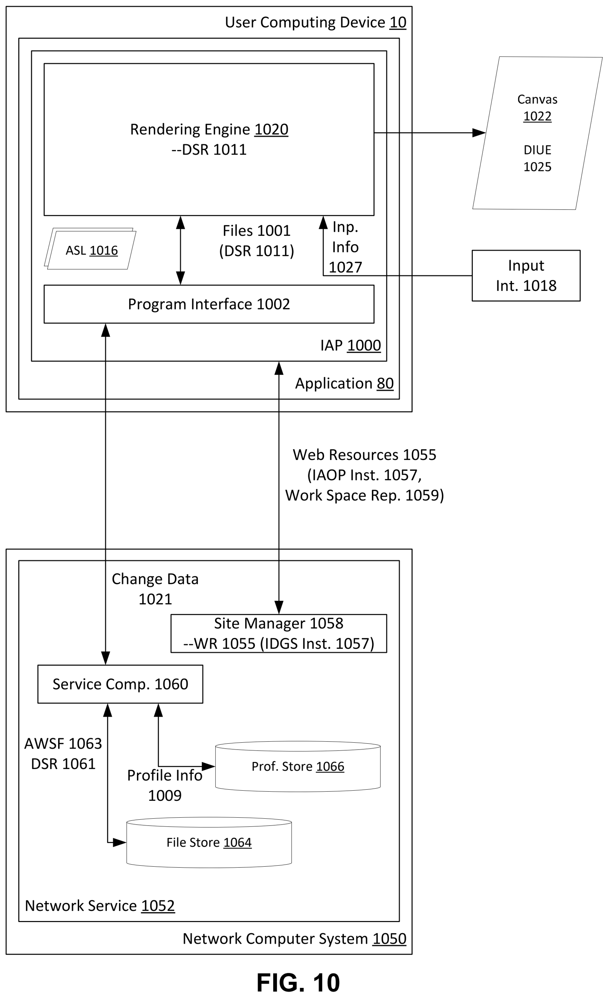

Figure 10 illustrates a network computing system to implement an interactive application platform on a user computing device, according to some embodiments. A network computing system such as illustrated in Figure 10 can be implemented using one or more servers which communicate with user computing devices over one or more networks. The network computer system 1050 illustrated in Figure 10 may correspond, for example, to the computing device 100 illustrated in Figure 1 and can be used to generate and/or modify visual content based on generative artificial intelligence models and an input prompt specifying a design objective for the visual content.

In some embodiments, the network computing system 1050 performs operations to enable an interactive application platform ("IAP 1000") to be implemented on user computing devices 10. In some embodiments, the IAP 1000 can be implemented by the user initiating a session (e.g., user accessing a website) to receive programmatic resources of the IAP 1000. A browser component executes the programmatic resources to implement the IAP 1000, with functionality to receive user input and to render content that is based on or responsive to user input. As described, the IAP 1000 is implemented to enable the user to create various types of content, such as interactive graphic designs, art, whiteboard content, program code renderings, presentations, and/or textual content. As further described, the IAP 1000 can include logic ("ASL 1016") for implementing one or more application services, where each application service is implemented through the IAP 1000 to provide a corresponding set of functionality and user experience. The IAP 1000 also implements the application services to share some resources, such as the canvas, workspace file or library of design elements. Further, the IAP 1000 enables multiple application services to be used during a given online session and/or with respect to a particular application service.

According to some embodiments, a user of computing device 10 operates web-based application 80 to access a network site, where programmatic resources are retrieved and executed to implement the IAP 1000. The web-based application 80 can execute scripts, code and/or other logic (the "programmatic components") to implement functionality of the IAP 1000. In some embodiments, the web-based application 80 can correspond to a commercially available browser, such as GOOGLE CHROME (developed by GOOGLE, INC.) or SAFARI (developed by APPLE, INC.). In some embodiments, the processes of the IAP 1000 can be implemented as scripts and/or other embedded code which web-based application 80 downloads from a network site. For example, the web-based application 80 can execute code that is embedded within a webpage to implement processes of the IAP 1000. The web-based application 80 can also execute the scripts to retrieve other scripts and programmatic resources (e.g., libraries) from the network site and/or other local or remote locations. By way of example, the web-based application 80 may execute JAVASCRIPT embedded in an HTML resource (e.g., web-page structured in accordance with HTML 5.0 or other versions, as provided under standards published by W3C or WHATWG consortiums). In some embodiments, the rendering engine 1020 may utilize graphics processing unit (GPU) accelerated logic, such as provided through WebGL (Web Graphics Library) programs which execute Graphics Library Shader Language (GLSL) programs that execute on GPUs.

The IAP 1000 can be implemented as part of a network service, where web-based application 80 communicates with one or more remote computers (e.g., server used for a network service) to execute processes of the IAP 1000. The web-based application 80 retrieves some or all of the programmatic resources for implementing the IAP 1000 from a network site. The web-based application 80 may also access various types of data sets in providing the IAP 1000. The data sets can correspond to files and design libraries (e.g., predesigned design elements), which can be stored remotely (e.g., on a server, in association with an account) or locally. In some embodiments, the network computer system 1050 provides a shared design library which the user computing device 10 can use with any of the application services provided through the IAP 1000. In this way, the user may initiate a session to implement the IAP 1000 for the purpose of creating or editing the workspace file, as rendered on the canvas 1022, in accordance with one of multiple collaborative application services of the IAP 1000.

In some embodiments, the IAP 1000 includes a program interface 1002, an input interface 1018 and a rendering engine 1020. The program interface 102 can include one or more processes which execute to access and retrieve programmatic resources from local and/or remote sources. In an implementation, the program interface 1002 can generate, for example, a canvas 1022, using programmatic resources which are associated with web-based application 80 (e.g., HTML 5.0 canvas). As an addition or variation, the program interface 1002 can trigger or otherwise cause the canvas 1022 to be generated using programmatic resources and data sets (e.g., canvas parameters) which are retrieved from local (e.g., memory) or remote sources (e.g., from network service).

The program interface 1002 may also retrieve programmatic resources that include an application framework for use with canvas 1022. The application framework can include data sets which define or configure, for example, a set of interactive graphic tools that integrate with the canvas 1022 and which comprise the input interface 1018, to enable the user to provide input to generate or update content rendered on the canvas 1022.

According to some embodiments, the input interface 1018 can be implemented as a functional layer that is integrated with the canvas 1022 to detect and interpret user input. The input interface 1018 can, for example, process a user's interaction with an input mechanism (e.g., pointer device, keyboard) of the user computing device, to detect, for example, cursor positioning/movement with respect to the canvas 1022, hover input (e.g., pre-selection input), selection input (e.g., clicks or double clicks), shortcuts (e.g., key board inputs) and other inputs. In processing a user's interaction with a pointer device, the input interface 1018 can use a reference of the canvas 1022 to identify a screen location of a user's cursor as the user moves or otherwise interacts with the pointer device. Additionally, the input interface 1018 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In some embodiments, the input interface 1018 can interpret, for example, a series of inputs as a design tool selection (e.g., shape selection based on location of input), as well as inputs to define attributes (e.g., dimensions) of a selected shape. In some embodiments, the input interface 1018 can interpret a continuous input (corresponding to a continuous movement of the user's pointer device) as selecting a tool (e.g., shape too) and canvas location where an output of the selected tool is to appear.

In some embodiments, the IAP 1000 includes application service logic 1016 to enable multiple application services to be utilized during a given user session, where each application service provides the user with a particular functionality and/or user experience. As described by some embodiments, each application service is implemented by the IAP 1000 utilizing a corresponding application service logic 1016 to configure the interface component 1018, rendering engine 1020 and/or other components of the IAP 1000 to provide the functionality and user experience of the corresponding application service. In this way, the IAP 1000 enables the user to operate multiple application services during one online session. Further, the different application services can share resources, including programmatic resources of the IAP 1000, such as canvas 1022. In this way, each application service can contribute content to and/or utilize features and content provided with the canvas 1022 during a given session. Still further, the application services can be implemented as alternative modalities of IAP 1000, such that the user can toggle between modes, where each mode provides a particular functionality and user experience. In some embodiments, each application service can utilize a common workspace file associated with the user. By default, a computing device that opens the workspace file can utilize a default application service to access and/or update that workspace file. The user may also switch the mode of operation of the IAP 1000 to utilize a different application service to access, use and/or update the workspace file.

The network computing system 1050 can include a site manager 1058 to manage a website where a set of web-resources 1055 (e.g., web page) are made available for the web-based application 80 of user computing devices 10. The web-resources 1055 can include instructions, such as scripts or other logic ("ICAP instructions 1057"), which are executable by browsers or web components of user computing devices. The web resources 1055 can also include (i) resources that are to be shared as between application services, provided to the user computing devices in connection with the user computing devices utilizing either of the application services, and (ii) application specific resources, which execute on the user computing devices for a particular one of the available application services. The web resources 1055 can also include a design library of design elements that is partially or fully shared as between the application services. The library of design elements can enable the user to select predetermined design elements for use on the canvas 1022 in connection with the user utilizing either of the application services.

In some variations, once the computing device 10 accesses and downloads the web-resources 1055, web-based application 80 executes the IAP
instructions 1057 to implement functionality as described above. For example, the IAP instructions 1057 can be executed by web-based application 80 to initiate the program interface 1002 on the user computing device 10. The initiation of the program interface 1002 may coincide with the establishment of, for example, a web-socket connection between the program interface 1002 and a service component 1060 of the network computing system 1050.

In some embodiments, the web-resources 1055 includes logic which web-based application 80 executes to initiate one or more processes of a program interface 1002, causing the IAP 1000 to retrieve additional programmatic resources and data sets for implementing functionality as described by examples. The web resources 1055 can, for example, embed logic (e.g., JAVASCRIPT code), including GPU accelerated logic, in an HTML page for download by computing devices of users. The program interface 1002 can be triggered to retrieve additional programmatic resources and data sets from, for example, the network service 1052, and/or from local resources of the computing device 10, in order to implement each of the multiple application services of the IAP 1000. For example, some of the components of the IAP 1000 can be implemented through webpages that can be downloaded onto the computing device 10 after authentication is performed, and/or once the user performs additional actions (e.g., download one or more pages of the workspace associated with the account identifier). Accordingly, in examples as described, the network computing system 1050 can communicate the IAP instructions 1057 to the computing device 10 through a combination of network communications, including through downloading activity of web-based application 80, where the IAP instructions 1057 are received and executed by web-based application 80.

The computing device 10 can use web-based application 80 to access a website of the network service 1052 to download the webpage or web resource. Upon accessing the website, web-based application 80 can automatically (e.g., through saved credentials) or through manual input, communicate an account identifier to the service component 1060. In some embodiments, web-based application 80 can also communicate one or more additional identifiers that correlate to a user identifier.

Additionally, in some embodiments, the service component 1060 can use the user or account identifier of the user identifier to retrieve profile information 1009 from a user profile store 1066. As an addition or variation, profile information 1009 for the user can be determined and stored locally on the user's computing device 10.

The service component 1060 can also retrieve the files of an active workspace ("active workspace files 1063") that are linked to the user account or identifier from a file store 1064. The profile store 1066 can also identify the workspace that is identified with the account and/or user, and the file store 1064 can store the data sets that comprise the workspace. The data sets stored with the file store 1064 can include, for example, the pages of a workspace and one or more data structure representations 1061 for the design under edit which is renderable from the respective active workspace files.

As an addition or variation, each file can be associated with metadata that identifies the application service that was used to create the particular file. In some embodiments, the metadata identifies the default application service for viewing, utilizing or otherwise updating the application service.

Additionally, in some embodiments, the service component 1060 provides a representation 1059 of the workspace associated with the user to the web-based application 80, where the representation identifies, for example, individual files associated with the user and/or user account. The workspace representation 1059 can also identify a set of files, where each file includes one or multiple pages, and each page including objects that are part of a design interface.

On the user device 10, the user can view the workspace representation through web-based application 80, and the user can elect to open a file of the workspace through web-based application 80. In some embodiments, upon the user electing to open one of the active workspace files 1063, web-based application 80 initiates the canvas 1022. For example, the IAP 100 can initiate an HTML 5.0 canvas as a component of web-based application 80, and the rendering engine 120 can access one or more data structures representations 1011 of content rendered on the canvas 1022.

The IAP 1000 utilizes application service logic 1016 to implement multiple modes of operation, where each mode corresponds to an application service. As described, the application service logic 1016 associated with each service application can include instructions and data for configuring the components of IAP 1000 to include functionality and features of the corresponding application service. Accordingly,
the application service logic 1016 can, for example, configure the application framework and/or input interface 1018 to differ in form, functionality and/or configuration as between the alternative modes of the IAP 1000. Additionally, the type of actions and interactions which the user can perform to register input can vary based on the modes of operation. Still further, the different modes of operation can include different input or user-interface features for the user to select and use for inclusion on the canvas 1022. By way of example, when the IAP 1000 is operating in a mode for whiteboarding service application, the program interface 1002 can provide input features to enable a user to select a design element that is in the form of a "sticky note," while in an alternative mode for an interactive graphic design service application, the "sticky note feature" is not available. However, in the alternative mode, the user may be able to select anyone of numerous possible shapes or previously designed objects which the user can write textual messages in for display on the canvas 1022.

Additionally, the application service logic 1016 can configure the operation of the rendering engine 1020, such that the functionality and behavior of the rendering engine 1020 differs as between different application services. In this way, the rendering engine 1020 functions to provide alternative behaviors for different modes of operation, coinciding with the particular service application that is active. By way of example, the configuration of the rendering engine 1020 can affect the appearance of the canvas 1022, the appearance (e.g., visual attributes) of rendered content elements on the canvas 1022, the behavior or representation of user interaction (e.g., whether the user cursor or pointe device is represented on the canvas 1022), the type or specific content that is rendered, the physic engine that is used by the rendering engine to represent dynamic events (e.g., the object being moved), what user operations can be performed (e.g., whether select objects can be resized), and the like.

Additionally, each of the application services can utilize a shared library of content elements (e.g., graphic design element), as well as core functionality that enables design elements to be shared and updated between the different application services that are available through the platform. Additionally, the workspace file created and edited through use of one application service can be utilized with the other application service. Moreover, the transition between application services can be seamless-for example, the user computing device 10 can open a workspace file using the first application service (e.g., interactive graphic design application service for UIX design) then seamlessly switch to using the second application service (e.g., whiteboarding application service) with the same file, without closing the workspace file. In some embodiments, each application service enables the user to update the workspace file even while the workspace file is in use by other computing devices (e.g., such as in a collaborative environment). In some embodiments, the user can mode switch the IAP 1000 to switch which application service is in use, with each application service utilizing the workspace file.

### Example Clauses

Various aspects of the present disclosure are described in the following numbered clauses.
1. In some embodiments, a processor-implemented method, comprising: receiving an indication of a visual asset for modification and an input natural language prompt specifying a design objective to be applied to the indicated visual asset; translating the design objective to a plurality of transforms to be applied to the indicated visual asset; generating a candidate set of visual assets based on applying the plurality of transforms to the indicated visual asset; and outputting the candidate set of visual assets for selection in a user interface.
2: The method of clause 1, wherein the candidate set of visual assets comprises a first set of visual assets generated based on applying the plurality of transforms to the indicated visual asset and one or more other sets of visual assets generated based on prior iterations of applying transforms to prior selections of visual assets.
3: The method of clauses 1 or 2, wherein the indication of the visual asset comprises a selection of the visual asset from a candidate set of visual assets, the candidate set including one or more sub-sets of visual assets generated based on transforms generated from the design objective.
4: The method of clause 3, wherein visual assets in a second sub-set of visual assets in the one or more sub-sets are generated based on a selected visual asset in a first sub-set of visual assets.
5: The method of clauses 3 or 4, wherein: the indicated visual asset comprises a visual asset included in a first sub-set of visual assets, the first sub-set of visual assets being generated in an inferencing round prior to an inferencing round in which a second sub-set of visual assets was generated; generating the candidate set of visual assets comprises generating a third sub-set of visual assets based on the indicated visual asset in the first sub-set of visual assets and the plurality of transforms; and outputting the candidate set of visual assets for selection in the user interface comprises replacing the second sub-set of visual assets with the third sub-set of visual assets.
6: The method of any of clauses 1 through 5, further comprising: temporarily modifying the user interface based on a transitory selection of a visual asset in the candidate set of visual assets.
7: The method of clauses 1 through 6, further comprising: receiving an indication of a selected visual asset from the candidate set of visual assets to implement in the user interface; receiving an indication of one or more modifications to apply to the selected visual asset; and generating a modified visual asset based on the indicated one or more modifications and the selected visual asset.
8: The method of clause 7, wherein the indicated one or more modifications comprise substitution of placeholder content in the selected visual asset with other content.
9: The method of clauses 7 or 8, wherein the indicated one or more modifications comprise additional visual components to add to the selected visual asset, the additional visual components being defined based at least on a position at which the additional visual components are to be added to the selected visual asset and a size of the additional visual components.
10: The method of any of clauses 1 through 9, wherein the plurality of transforms comprise modifications to a vector definition of the indicated visual asset that result in creation of visual assets conforming to the design objective.
11: The method of clause 10, wherein the modifications comprise one or more of a change in size, a change in position, or a change in spatial relationships relative to one or more other visual components in the visual asset.
12: A processor-implemented method, comprising: receiving an indication of a visual asset for modification and an input natural language prompt specifying a design objective to be applied to the indicated visual asset; identifying visual components in the indicated visual asset and properties of the identified visual components to be modified based on the specified design objective; populating one or more control panels with one or more controls for modifying the identified visual components to achieve the specified design objective; receiving an input in at least one of the one or more control panels; and modifying the indicated visual asset based on the received input.
13: The method of clause 12, wherein the input comprises a slider input associated with a design property of the visual asset.
14: The method of clause 13, wherein an adjustment to the slider input applies a global modification to the identified visual components.
15: The method of clauses 13 or 14, wherein the slider input is displayed in a first control panel, and wherein an adjustment to the slider input modifies one or more of the properties of the identified visual components displayed in a second control panel.
16: The method of any of clauses 13 through 15, wherein a range associated with the slider input comprises a minimum value associated with a first set of values for the identified properties of the identified visual components and a maximum value associated with a second set of values for the identified properties of the identified visual components, and wherein the first set of values and the second set of values are identified based on the specified design objective.
17: The method of any of clauses 12 through 16, wherein the input comprises an adjustment to a property of the identified properties associated with one visual component of the identified visual components.
18: The method of any of clauses 12 through 17, wherein a range of valid values for the identified properties of the identified visual components is associated with a defined amount of modification to apply to the visual asset.
19: The method of any of clauses 12 through 18, wherein a range of valid values for the identified properties of the identified visual components is defined relative to another visual component in a user interface.
20.A processing system, comprising: at least one memory having executable instructions thereon; and one or more processors configured to execute the executable instructions to cause the processing system to perform the method of any of clauses 1 through 19.
21.A non-transitory computer-readable medium having executable instructions stored thereon which, when processed by one or more processors, causes the one or more processors to perform the method of any of clauses 1 through 19.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A processor-implemented method, comprising:
receiving an indication of a visual asset for modification and an input natural language prompt specifying a design objective to be applied to the indicated visual asset;
translating the design objective to a plurality of transforms to be applied to the indicated visual asset;
generating a candidate set of visual assets based on applying the plurality of transforms to the indicated visual asset; and
outputting the candidate set of visual assets for selection **in** a user interface.

2. The method of claim 1, wherein the candidate set of visual assets comprises a first set of visual assets generated based on applying the plurality of transforms to the indicated visual asset and one or more other sets of visual assets generated based on prior iterations of applying transforms to prior selections of visual assets.

3. The method of claim 1 or 2, wherein the indication of the visual asset comprises a selection of the visual asset from a candidate set of visual assets, the candidate set including one or more sub-sets of visual assets generated based on transforms generated from the design objective.

4. The method of claim 3, wherein visual assets in a second sub-set of visual assets in the one or more sub-sets are generated based on a selected visual asset in a first sub-set of visual assets.

5. The method of claim 3 or 4, wherein:
the indicated visual asset comprises a visual asset included in a first sub-set of visual assets, the first sub-set of visual assets being generated in an inferencing round prior to an inferencing round in which a second sub-set of visual assets was generated;
generating the candidate set of visual assets comprises generating a third sub-set of visual assets based on the indicated visual asset in the first sub-set of visual assets and the plurality of transforms; and
outputting the candidate set of visual assets for selection in the user interface comprises replacing the second sub-set of visual assets with the third sub-set of visual assets.

6. The method of any preceding claim, further comprising:
temporarily modifying the user interface based on a transitory selection of a visual asset in the candidate set of visual assets.

7. The method of any preceding claim, further comprising:
receiving an indication of a selected visual asset from the candidate set of visual assets to implement in the user interface;
receiving an indication of one or more modifications to apply to the selected visual asset; and
generating a modified visual asset based on the indicated one or more modifications and the selected visual asset.

8. The method of claim 7, wherein the indicated one or more modifications comprise substitution of placeholder content in the selected visual asset with other content.

9. The method of claim 7 or 8, wherein the indicated one or more modifications comprise additional visual components to add to the selected visual asset, the additional visual components being defined based at least on a position at which the additional visual components are to be added to the selected visual asset and a size of the additional visual components.

10. The method of any preceding claim, wherein the plurality of transforms comprise modifications to a vector definition of the indicated visual asset that result in creation of visual assets conforming to the design objective.

11. The method of claim 10, wherein the modifications comprise one or more of a change in size, a change in position, or a change in spatial relationships relative to one or more other visual components in the visual asset.

12. A processing system, comprising:
at least one memory having executable instructions stored thereon; and
one or more processors configured to execute the executable instructions to cause the processing system to:
receive an indication of a visual asset for modification and an input natural language prompt specifying a design objective to be applied to the indicated visual asset;
translate the design objective to a plurality of transforms to be applied to the indicated visual asset;
generate a candidate set of visual assets based on applying the plurality of transforms to the indicated visual asset; and
output the candidate set of visual assets for selection in a user interface.

13. The processing system of claim 12, wherein the candidate set of visual assets comprises a first set of visual assets generated based on applying the plurality of transforms to the indicated visual asset and one or more other sets of visual assets generated based on prior iterations of applying transforms to prior selections of visual assets.

14. The processing system of claim 12 or 13, wherein the indication of the visual asset comprises a selection of the visual asset from a candidate set of visual assets, the candidate set including one or more sub-sets of visual assets generated based on transforms generated from the design objective.

15. The processing system of claim 14, wherein visual assets in a second sub-set of visual assets in the one or more sub-sets are generated based on a selected visual asset in a first sub-set of visual assets.
